# EUROPÄISCHE PATENTSCHRIFT

(11) **EP 4 262 155 B1**
(45) Veröffentlichungstag und Bekanntmachung des Hinweises auf die Patenterteilung: **28.01.2026**
(21) Anmeldenummer: 23161332.4
(22) Anmeldetag: 10.03.2023
(51) Int. Cl.: H04L 67/50, H04L 67/56, H04L 12/40, H04L 69/18

(54) **VORRICHTUNG UND VERFAHREN ZUM VERBINDEN EINES FELDGERÄTS MIT EINEM KOMMUNIKATIONSSYSTEM**
DEVICE AND METHOD FOR CONNECTING A FIELD DEVICE TO A COMMUNICATION SYSTEM
DISPOSITIF ET PROCÉDÉ DE CONNEXION D'UN APPAREIL DE TERRAIN À UN SYSTÈME DE COMMUNICATION

(30) Priorität: 12.04.2022 DE 102022108807
(43) Veröffentlichungstag der Anmeldung: 18.10.2023
(73) Patentinhaber: Turck Holding GmbH, 58553 Halver (DE)
(72) Erfinder: Praske, Heinz-Peter, 45968 Gladbeck (DE)
(74) Vertreter: DTS Patent- und Rechtsanwälte PartmbB

(56) Entgegenhaltungen:
- US-A1- 2005 228 509

## Beschreibung

Die Erfindung betrifft eine Vorrichtung und ein Verfahren zum Verbinden eines Feldgeräts mit einem Kommunikationssystem.

Aktuell werden analoge Feldgeräte, beispielsweise in der Prozesstechnik, in vielen Fällen mit einem HART-Interface betrieben. Die Kommunikation über das HART-Interface dient zur Parametrierung der Feldgeräte sowie zur Diagnose und zur Übertragung weitere Begleitinformationen. Ein Auf- und Abbau von Kommunikationsvorgängen mit den Feldgeräten und der Austausch von Daten kann durch eine Punkt-zu-Punkt Verbindung mittels HART-Modem und PC erfolgen. Ferner kann die Kommunikation über dezentrale Peripheriegeräte erfolgen, die Analogmodule mit HART-Controllern bereitstellen und als HART-Multiplexer dienen.

Die Kommunikation über das HART-Protokoll ist gegenüber moderneren Ethernet-basierten Lösungen langsam und für den permanenten Datenaustausch größerer Datenmengen eher ungeeignet.

Es wurde eine Busphysik entwickelt, welche die Vorteile von HART bietet und gleichzeitig den Anforderungen nach schnellem Datentransport großer Datenmengen gerecht wird. Ähnlich wie beim HART-Protokoll erfolgt beim sogenannte Advanced Physical Layrer (APL) die Kommunikation mit dem Feldgerät und die Energieversorgung über eine 2-LeiterSchnittstelle. Die Datenübertragung erfolgt bei APL über Ethernet-basierte Protokolle.

Ein großer Teil der aktuell vorhandenen Feldgeräte, insbesondere Sensoren und/oder Aktoren, nutzen das HART-Protokoll einerseits zur Konfiguration und Parametrierung und andererseits für die Übertragung von weiteren Geräteinformationen. Beispielsweise werden sogenannte dynamische Variablen übertragen, beispielsweise eine Gerätetemperatur oder eine Medientemperatur bei einer Durchflussmessung. Bei dynamischen Variablen erfolgt die Übertragung etwa zweimal pro Sekunde. Der Hauptmesswert eines Sensors oder der Sollwert eines Aktors wird durch das standardisierte Stromsignal 4 - 20 mA als Analog-Signal auf einer 2-Leiterschnittstelle abgebildet, wobei eine Refresh-Zeit von etwa 20 ms erreicht wird.

Das HART-Protokoll stellt insbesondere ein FSK-Verfahren bereit *(Frequency Shift Keying).* Auf das 2-Draht-Messsignal von 4 - 20 mA wird dabei ein Signal aufmoduliert. Ein Transmitter-Speisetrenner kann die notwendige Energie zur Versorgung der Feldgeräte zu Verfügung stellen (sogenannter aktiver Eingang). Das Messsignal besteht dann in der Stromaufnahme des Feldgerätes im Bereich von 4 - 20 mA. Im Falle eines Leitungsbedarfs, der von einem aktiven Eingang nicht zur Verfügung gestellt werden kann, werden derartige Feldgeräte mit einer separaten Hilfsenergie versorgt. Das Messsignal von 4 - 20 mA wird direkt vom Feldgerät generiert, das mit einem sogenannten passiven Eingang zur Weiterverarbeitung verbunden wird.

Die Kommunikation über APL erfolgt insbesondere mittels Ethernet-basierter Protokolle und unterscheidet sich wesentlich von dem HART-Protokoll, dem eine völlig anders konzipierte physikalische Schicht zugrunde liegt.

In der Praxis stellt sich die Herausforderung, dass die Erneuerung bestehender Anlagen und eine Umrüstung auf eine Ethernet-basierte Kommunikation noch lange Zeit in Anspruch nehmen wird und dass in der Zwischenzeit verschiedene Technologien nebeneinander verwendet werden müssen.

Aus der WO 2021/152010 A1 ist ein SPE-basierter Geräteadapter zum Anschließen eines nicht Ethernet-fähigen Feldgeräts an einen Ethernet-basiertes Prozesssteuersystem bekannt. In der US 10,432,412 B2 wird eine konfigurierbare Schnittstelle für eine Prozesssteuerungseinrichtung beschrieben. Aus der US 10,296,483 B2 ist ein Feldbus-Netzwerk bekannt. Die DE 10 2017 07 535 A1 beschreibt ein *Power-over-Ethernet*-basiertes Feldgerät. Aus der US 2005/228509 A1 ist eine Vorrichtung zur Bereitstellen einer adaptiven Feldbus-Verbindung bekannt.

Es ist daher die Aufgabe der Erfindung, eine Vorrichtung und ein Verfahren zum Verbinden eines Feldgeräts mit einem Kommunikationssystem bereitzustellen, die eine maximale Kompatibilität mit verschiedenen Komponenten ermöglichen.

Diese Aufgabe wird durch eine Vorrichtung und ein Verfahren der eingangs genannten Art mit den Merkmalen der unabhängigen Ansprüche gelöst. Vorteilhafte Ausgestaltungen und Weiterbildungen der Erfindung sind in den abhängigen Ansprüchen angegeben.

Die Vorrichtung zum Verbinden eines Feldgeräts mit einem Kommunikationssystem umfasst eine Feldgerät-Schnittstelle zum Anschließen des Feldgeräts, eine Kommunikations-Schnittstelle zum Anschließen an das Kommunikationssystem, zumindest eine Protokoll-Umsetzungseinheit und eine Umschaltungseinheit. Dabei ist die Umschaltungseinheit dazu eingerichtet, beim Anschluss des Feldgeräts ein von dem Feldgerät verwendetes Protokoll zu erkennen und in Abhängigkeit von dem erkannten Protokoll eine Verbindung zwischen dem angeschlossenen Feldgerät und der Kommunikations-Schnittstelle über die Protokoll-Umsetzungseinheit herzustellen.

Ferner kann die Verbindung zwischen dem angeschlossenen Feldgerät und der Kommunikations-Schnittstelle in Abhängigkeit von dem erkannten Protokoll auch direkt unter Umgehung der Protokoll-Umsetzungseinheit hergestellt werden.

Das angeschlossene Feldgerät kann auf an sich bekannte Weise ausgebildet sein und beispielsweise einen Sensor und/oder einen Aktor umfassen. Ein Sensor erfasst etwa eine Messgröße und stellt diese über eine datentechnische Schnittstelle bereit, während ein Aktor dazu eingerichtet ist, eine Stellgröße zu empfangen und entsprechend eine Einstellung vorzunehmen.

Die Protokoll-Umsetzungseinheit kann mit der Kommunikations-Schnittstelle gekoppelt sein. Beispielsweise ist die Protokoll-Umsetzungseinheit zwischen der Umschaltungseinheit und der Kommunikations-Schnittstelle der Vorrichtung angeordnet.

Die Protokoll-Umsetzungseinheit ist dazu eingerichtet, eine Kommunikation mit dem Feldgerät über ein von diesem verwendetes Protokoll abzuwickeln und mit einer Kommunikation über ein weiteres Protokoll für das Kommunikationssystem zu verbinden. Das heißt, es wird eine Kommunikation zwischen dem Kommunikationssystem und dem Felggerät ermöglicht, obwohl diese verschiedene Protokolle verwenden.

Durch die Umschaltungseinheit wird erkannt, welches Protokoll das angeschlossene Feldgerät verwendet, und je nach dem verwendeten Protokoll wird eine datentechnische Verbindung des Feldgeräts mit der Umschaltungseinheit hergestellt. Wenn das Feldgerät ein mit dem Kommunikationssystem kompatibles Protokoll verwendet, dann wird insbesondere eine datentechnische Verbindung des Feldgeräts mit dem Kommunikationssystem hergestellt, ohne dass dabei eine Umsetzung des Protokolls erforderlich wäre.

Das heißt, die Umschaltungseinheit ist insbesondere dazu eingerichtet, zwischen verschiedenen indirekten und/oder direkten datentechnischen Verbindungen des Feldgeräts mit dem Kommunikationssystem umzuschalten.

Die Vorrichtung ist dazu eingerichtet, über die Kommunikations-Schnittstelle an das Kommunikationssystem angeschlossen zu werden und über das Kommunikationssystem eine Kommunikation durchzuführen. Insbesondere ist daher das Feldgerät, unabhängig von der direkten Kompatibilität der verwendeten Protokolle, an das Kommunikationssystem anschließbar und es kann in ein größeres System eingebunden werden, etwa ein System von Feldgeräten und Steuerungseinrichtungen.

Das Kommunikationssystem umfasst ein Bus-System, nämlich ein Ethernet-basiertes Bus-System.

Dadurch wird vorteilhafterweise ein Anschluss des Feldgeräts an ein Bus-System ermöglicht. Gebräuchliche Bus-Systeme ermöglichen gute Datenübertragung mit hoher Geschwindigkeit und großen Datenvolumen.

Es können unterschiedliche, an sich bekannte Bus-Systeme verwendet werden. Insbesondere verwendet das Bus-System einen Ethernet-basierten Standard zur Kommunikation. Beispielsweise kann das Kommunikationssystem als Feldbus ausgebildet sein.

Ferner ist die Umschaltungseinheit erfindungsgemäß dazu eingerichtet, wenn das von dem angeschlossenen Feldgerät verwendete Protokoll ein HART-Protokoll ist, eine Verbindung zwischen dem angeschlossenen Feldgerät und der Protokoll-Umsetzungseinheit herzustellen. Dabei umfasst die Protokoll-Umsetzungseinheit ferner ein HART-Mastergerät.

Dies ermöglicht vorteilhafterweise den Anschluss eines HART-kompatiblen Feldgeräts an ein Kommunikationssystem, unabhängig von dem von letzterem verwendeten Protokoll. Insbesondere kann ein Anschluss an ein Ethernet-kompatibles Bus-System erfolgen. Das Kommunikationssystem kann daher mit einem Ethernet-kompatiblen Protokoll verwendet werden, selbst wenn nicht alle Feldgeräte an diese Kommunikation angepasst sind.

Bei einer Weiterbildung ist, wenn das von dem angeschlossenen Feldgerät verwendete Protokoll ein HART-Protokoll ist, eine Stromschleife zur Versorgung des Feldgerätes mit 4 - 20 mA aktivierbar.

Dadurch wird vorteilhafterweise der Betrieb des Feldgeräts auch dann ermöglicht, wenn von dem Kommunikationssystem weitere, nicht mit dem HART-Protokoll kompatible Protokolle verwendet werden. Die hierfür notwendige Stromversorgung kann in diesem Fall über die Vorrichtung erfolgen, selbst wenn andere vergleichbare Einrichtungen fehlen. Insbesondere kann dies durch ein von der Vorrichtung umfasstes HART-Mastergerät bereitgestellt werden.

Ferner ist die Umschaltungseinheit erfindungsgemäß dazu eingerichtet, eine direkte Verbindung zwischen dem angeschlossenen Feldgerät und der Kommunikations-Schnittstelle herzustellen, wenn die von dem angeschlossenen Feldgerät verwendete Übertragungsphysik dem APL-Standard entspricht und ein Ethernet-basiertes Protokoll verwendet.

Dadurch können vorteilhafterweise auch direkt APL-kompatible Feldgeräte mit der Vorrichtung verwendet und mit dem Kommunikationssystem verbunden werden. Die Vorrichtung kann dann nach Art eines gewöhnlichen Switch betrieben werden. Insbesondere muss keine Umwandlung zwischen einem Ethernet-kompatiblen Kommunikationssystem und dem APL-kompatiblen Feldgerät erfolgen, da auch dieses Ethernet-kompatibel ist.

Bei einer weiteren Ausbildung ist die Feldgerät-Schnittstelle zum Anschließen mehrerer Feldgeräte eingerichtet. Dabei können die Feldgeräte unterschiedliche Protokolle verwenden.

Dadurch kann die Vorrichtung vorteilhafterweise dazu verwendet werden, die Kommunikationsverbindungen zu verschiedenen Feldgeräte zusammenzufassen und mit dem Kommunikationssystem zu verbinden.

Insbesondere kann vorgesehen sein, dass mehrere Anschlüsse der Vorrichtung in einem Peripherie-Modul zusammengefasst werden, welches mit einem Kommunikations-Modul verbunden ist. Die Vorrichtung umfasst in diesem Fall die beiden Module, an die auf Seiten des Peripherie-Moduls ein oder mehrere Feldgeräte angeschlossen werden können und auf Seiten des Kommunikations-Moduls das Kommunikationssystem angeschlossen werden kann. Insbesondere ist dabei für jeden Anschluss des Peripherie-Moduls ein Kommunikations-Modul vorgesehen; bei einer Vielzahl von Anschlüssen für Feldgeräte kann dann eine ebenso große Vielzahl von Kommunikations-Modulen vorgesehen sein, die jeweils einem Anschluss zugeordnet sind und die in einem übergeordneten Modul zusammengefasst sind.

Insbesondere kann ein Remote-I/O-System implementiert sein. Dabei kann eine Vorrichtung oder eine Mehrzahl von Vorrichtungen über die Kommunikationsmodule mit einem internen Modulbus verbunden sein, wobei der Modulbus über ein nachgeschaltetes Gateway mit dem Kommunikationssystem gekoppelt ist. Dies erlaubt vorteilhafterweise ein Zusammenschalten von mehreren als Remote-I/O-Module gebildeten Vorrichtungen, sodass diese über einen gemeinsamen Anschluss mit dem Kommunikationssystem verbunden werden.

Bei einer Weiterbildung ist die Umschaltungseinheit dazu eingerichtet, beim Erkennen des von dem Feldgerät verwendeten Protokolls zunächst eine Anschlusserkennung gemäß Ethernet-Standard auszuführen und, falls kein Ethernet-basiertes Protokoll erkannt wurde, anschließend einen Verbindungsversuch mittels HART-Protokoll auszuführen.

Dadurch wird vorteilhafterweise sichergestellt, dass zunächst die Möglichkeit einer mit geringerer Spannung betrieben Datenverbindung über ein Ethernet-Protokoll geprüft wird, ehe die höheren Spannungswerte einer Verbindung gemäß HART-Protokoll geprüft werden. Auf diese Weise können Beschädigungen an Kommunikationskomponenten durch Überlastung und unzulässige Höchstwerte vermieden werden.

Bei dem Verfahren zum Verbinden eines Feldgeräts mit einem Kommunikationssystem wird beim Anschluss des Feldgeräts eine Erkennung eines von dem Feldgerät verwendeten Protokolls ausgeführt. Dabei wird in Abhängigkeit von dem erkannten Protokoll eine Verbindung zwischen dem angeschlossenen Feldgerät und dem Kommunikationssystem so hergestellt, dass eine Protokoll-Umsetzung ausgeführt wird.

Das Verfahren ist insbesondere dazu ausgebildet, die Vorrichtung zu betreiben. Es weist daher dieselben Vorteile auf wie die erfindungsgemäße Vorrichtung.

Nachfolgend wird die Erfindung anhand der anliegenden Zeichnungen näher erläutert. Dabei zeigen:
- **Figur 1A**: ein Ausführungsbeispiel der Vorrichtung;
- **Figur 1B**: ein weiteres Ausführungsbeispiel der Vorrichtung als Modul in einem Remote-I/O-System;
- **Figur 1C**: ein weiteres Ausführungsbeispiel der Vorrichtung als Einzellösung;
- **Figur 1D**: eine Detailansicht eines Peripherie-Moduls der Vorrichtung; und
- **Figur 2**: ein Ausführungsbeispiel des Verfahrens.

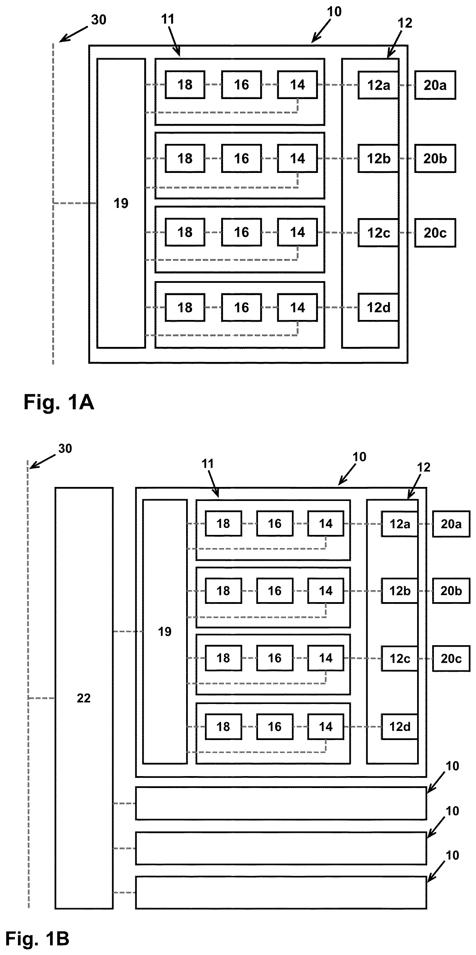

Mit Bezug zu **Figur 1A** wird ein Ausführungsbeispiel der Vorrichtung erläutert.

Die Vorrichtung 10 umfasst bei diesem Ausführungsbeispiel eine Mehrzahl von Kommunikations-Modulen **11** sowie ein Peripherie-Modul 12.

Bei weiteren Ausführungsbeispielen ist zumindest ein Kommunikations-Modul 11 vorgesehen.

Dabei sind die Kommunikations-Module **11** im Wesentlichen gleich aufgebaut.

Das Peripherie-Modul 12 und die Kommunikationsmodule **11** sind miteinander gekoppelt.

Bei dem Ausführungsbeispiel weist das Peripherie-Modul 12 Feldgerät-Schnittstellen 12a, 12b, 12c, 12d auf, die insbesondere als Ports beziehungsweise Anschlüsse für Feldgeräte 20a, 20b, 20c ausgebildet sind.

Bei dem Ausführungsbeispiel sind die Ports 12a, 12b, 12c, 12d im Wesentlichen gleich aufgebaut.

Die Ports 12a, 12b, 12c, 12d sind mit jeweils einem der Kommunikationsmodule 11 gekoppelt.

Insbesondere ist zwischen jeweils einem Kommunikationsmodul 11 und einem Port 12a, 12b, 12c, 12d eine Kopplung mittels drei Leitungen vorgesehen, die in den vorliegenden Figuren 1A bis 1D allerdings nur schematisch gezeigt sind.

Das Peripherie-Modul 12 begrenzt die angelegte Spannung auf den für das Feldgerät notwendigen Wert und moduliert das entsprechende Kommunikationssignal auf.

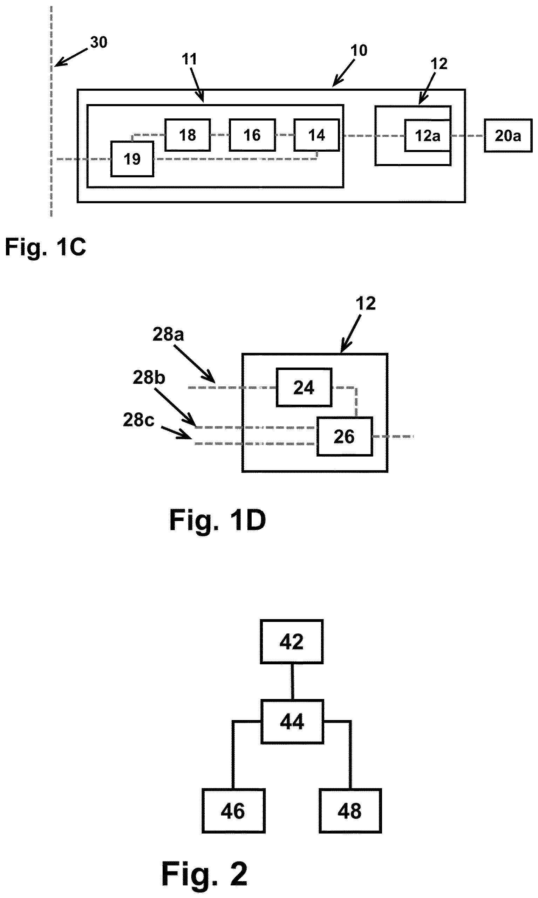

Nähere Details des Peripherie-Moduls 12 sind unten mit Bezug zu Figur 1D erläutert.

In dem hier gezeigten Fall sind die Feldgerät-Schnittstellen 12a, 12b, 12c, 12d dazu eingerichtet, über jeweils eine drahtgebundene Verbindung mit den Feldgeräten 20a, 20b, 20c verbunden zu werden. Dabei wird insbesondere eine elektrische Verbindung hergestellt, die zum Übertragen von Daten verwendet werden kann.

Gegebenenfalls kann die Verbindung zwischen den Feldgerät-Schnittstellen 12a, 12b, 12c, 12d auch zum Übertragen elektrischer Energie genutzt werden, insbesondere zum Bereitstellen einer Betriebsspannung eines Feldgeräts 20a, 20b, 20c und/oder einer Messeinrichtung des Feldgeräts 20a, 20b, 20c.

Bei einem weiteren Ausführungsbeispiel ist zumindest eine Feldgerät-Schnittstelle 12a, 12b, 12c, 12d dazu eingerichtet, eine drahtlose Verbindung zu einem Feldgerät 20a, 20b, 20c herzustellen, insbesondere über Funk.

Jedes der Kommunikations-Module 11 umfasst bei dem Beispiel eine Umschaltungseinheit 14. Diese ist mit einem HART-Mastergerät 16 gekoppelt, welches wiederum mit einer Protokoll-Umsetzungseinheit 18 gekoppelt ist.

Ferner ist bei dem Ausführungsbeispiel die Protokoll-Umsetzungseinheit 18 mit einer Kommunikations-Schnittstelle 19 gekoppelt, die hier als Ethernet-Switch 19 ausgebildet ist.

Zudem ist bei dem Ausführungsbeispiel auch die Umschaltungseinheit 14 direkt mit der Kommunikations-Schnittstelle 19 gekoppelt.

Bei dem gezeigten Fall sind mehrere Feldgerät-Schnittstellen 12a, 12b, 12c, 12d vorgesehen. Hier sind jeweils die Protokoll-Umsetzungseinheiten 18 und Umschaltungseinheiten 14 mit der Kommunikations-Schnittstelle 19 gekoppelt.

In einem weiteren Ausführungsbeispiel kann das Kommunikations-Modul 11 als eigenständige Einheit ausgebildet sein, das bereits eine Kommunikations-Schnittstelle 19 aufweist. Ein Beispiel einer derartigen Konfiguration wird unten mit Bezug zu Figur 1C näher erläutert.

Über die Kommunikations-Schnittstelle 19 ist die Vorrichtung 19 mit dem Kommunikationssystem 30 gekoppelt, welches diesem Beispiel als Ethernet-kompatibles Bus-System 30 ausgebildet ist.

Mit Bezug zu **Figur 1B** ein weiteres Ausführungsbeispiel der Vorrichtung als Modul in einem Remote-I/O-System erläutert. Dabei wird von dem oben erläuterten Ausführungsbeispiel der Vorrichtung ausgegangen. Funktionell oder strukturell gleiche oder vergleichbare Elemente sind mit den gleichen Bezugszeichen versehen.

Das hier beispielhaft gezeigte System weist mehrere Vorrichtungen 10 auf, die im Wesentlichen analog zueinander aufgebaut sind. Sie können sich beispielsweise in der Anzahl der vorgesehenen Kommunikations-Moduls 11 und/oder Ports 12a, 12b, 12c, 12d unterscheiden.

Die Vorrichtungen 10 sind dabei als Remote-I/O-Module ausgebildet.

Die Vorrichtungen 10 sind über ihre Kommunikations-Schnittstelle 19 mit einem Remote-I/O-Gateway 22 gekoppelt.

Insbesondere kann vorgesehen sein, dass die Kommunikations-Schnittstellen 19 der Vorrichtungen 10 beziehungsweise der Remote-I/O-Module mit einem internen ModulBus verbunden sind, dem das Remote-I/O-Gateway 22 nachgeschaltet ist.

Über das Remote-I/O-Gateway 22 erfolgt die Kommunikation zum Bus-System 30.

Das Remote-I/O-System erlaubt es, eine große Zahl von Feldgerät-Schnittstellen 12a, 12b, 12c, 12d bereitzustellen und diese sehr flexibel auch räumlich im Feld zu verteilen. Dies ermöglicht beispielsweise eine zentrale Steuerung und Überwachung von Feldgeräten 20a, 20b, 20c, selbst wenn diese weit verstreut angeordnet sind.

Bei einem weiteren Ausführungsbeispiel kann vorgesehen sein, dass statt einer Mehrzahl lediglich eine Vorrichtung 10 als einzelnes Remote-I/O-Modul über das Remote-I/O-Gateway 22 mit dem Bus-System 30 gekoppelt ist.

Mit Bezug zu Figur 1C wird ein weiteres Ausführungsbeispiel der Vorrichtung als Einzellösung erläutert. Auch hier wird von dem oben erläuterten Ausführungsbeispiel der Vorrichtung ausgegangen. Funktionell oder strukturell gleiche oder vergleichbare Elemente sind mit den gleichen Bezugszeichen versehen.

Bei diesem Ausführungsbeispiel weist die Vorrichtung 10 nur ein Kommunikations-Modul 11 und nur ein Peripherie-Modul 12 auf. Dementsprechend ist ein Port 12a vorgesehen, an den ein Feldgerät 20a anschließbar ist.

Das Kommunikations-Modul 11 ist aufgebaut wie oben beschrieben. Es umfasst eine Umschaltungseinheit 14, ein HART-Mastergerät 16 und eine Protokoll-Umsetzungseinheit 18 sowie eine Kommunikations-Schnittstelle 19.

Über die Kommunikations-Schnittstelle 19 ist die Vorrichtung 10 an das Bus-System 30 gekoppelt.

Mit Bezug zu **Figur 1D** wird eine Detailansicht eines Peripherie-Moduls der Vorrichtung erläutert. Es wird von den oben erläuterten Ausführungsbeispielen der Vorrichtung und der Peripherie-Module 12 ausgegangen. Funktionell oder strukturell gleiche oder vergleichbare Elemente sind mit den gleichen Bezugszeichen versehen.

Das Peripherie-Modul 12 weist bei diesem Beispiel einen Spannungsbegrenzer 24 und eine Modulationseinheit 26 auf.

Das Peripherie-Modul 12 ist hier mit nur einem Port zu einem Feldgerät 20a, 20b, 20c (nicht in der Figur dargestellt) gezeigt.

Bei dem Beispiel ist das Peripherie-Modul 12 über drei Leitungen 28a, 28b, 28c mit dem Kommunikations-Modul 11 (nicht in der Figur dargestellt) gekoppelt, die schematisch gezeigt sind.

Eine der Leitungen 28a ist mit einem Spannungsbegrenzer 24 verbunden. Der Spannungsbegrenzer 24 ist dazu eingerichtet, die über die Leitung 28a angelegte Spannung auf einen für das angeschlossene Feldgerät 20a, 20b, 20c notwendigen Wert zu bringen beziehungsweise zu große Spannungswerte zu unterbinden.

Der Spannungsbegrenzer ist wiederum mit der Modulationseinheit 26 gekoppelt.

Die Modulationseinheit 26 ist über zwei Leitungen 28b, 28c mit dem Kommunikations-Modul 11 gekoppelt.

Die Modulationseinheit 26 ist dazu eingerichtet, ein Kommunikationssignal zu empfangen und auf eine bereitgestellte Spannung zu modulieren.

Bei weiteren Ausführungsbeispielen ist vorgesehen, dass das Peripherie-Modul 12 über mehrere Ports 12a, 12b, 12c, 12d mit Feldgeräten 20a, 20b, 20c verbindbar. In diesem Fall sind für jeden Port 12a, 12b, 12c, 12d ein eigener Spannungsbegrenzer 24 und eine eigene Modulationseinheit 26 vorgesehen.

Mit Bezug zu **Figur 2** wird ein Ausführungsbeispiel des Verfahrens erläutert. Dabei wird von dem oben erläuterten Ausführungsbeispiel der Vorrichtung ausgegangen, welches nachfolgend zudem näher spezifiziert wird.

In einem ersten Schritt 42 wird ein Feldgerät 20a, 20b, 20c an eine der Feldgerät-Schnittstellen 12a, 12b, 12c, 12d der Vorrichtung 10 angeschlossen. Das Anschließen wird durch die Stromaufnahme des Feldgerätes erkannt und es wird ein Vorgang zum Erkennen des von dem angeschlossenen Feldgerät 20a, 20b, 20c verwendeten Protokolls gestartet.

Ferner kann dieser Schritt 42 auch ausgeführt werden, wenn ein an eine Feldgerät-Schnittstelle 12a, 12b, 12c, 12d angeschlossenes Feldgerät 20a, 20b, 20c neu gestartet oder initiiert wird.

Bei dem Ausführungsbeispiel wird in einem weiteren Schritt 44 die Erkennung des Protokolls ausgeführt. Bei diesem Beispiel ist vorgesehen, dass die Vorrichtung 10 zum Anschluss von Feldgeräten 20a, 20b, 20c geeignet ist, die entsprechend dem HART-Protokoll oder über ein Ethernet-kompatibles Protokoll kommunizieren.

Es wird zunächst geprüft, ob das angeschlossene Feldgerät 20a, 20b, 20c über das Ethernet-Protokoll kommuniziert. Dazu wird der Spannungsbegrenzer 24 auf die für APL typische Spannungsbegrenzung eingestellt und es wird ein standardgemäßes Signal aufmoduliert.

Wenn dabei ein Ethernet-konformes Kommunikationsverhalten des angeschlossenen Feldgeräts 20a, 20b, 20c erhalten wird, dann wird in einem Schritt 46 eine direkte Verbindung von der Umschaltungseinheit 14 zu der Kommunikations-Schnittstelle 19 hergestellt. Das heißt, in diesem Fall wird der Port 12a, 12b, 12c, 12d, an welchen das Feldgerät 20a, 20b, 20c angeschlossen ist, auf für APL-Geräte relevante Parameter hinsichtlich der Versorgung und des Datenaustauschs eingestellt und es wird eine Verbindung zwischen dem jeweiligen Port 12a, 12b, 12c, 12d und dem Kommunikationssystem 30 hergestellt.

Wird hingegen keine Ethernet-kompatible Verbindung erkannt, so wird anschließend geprüft, ob das angeschlossene Feldgerät 20a, 20b, 20c mittels einer mit dem HART-Protokoll kompatiblen Kommunikation ansprechbar ist. Hierzu wird das HART-Mastergerät 16 genutzt, welches das angeschossene Feldgerät 20a, 20b, 20c als Hart-Slavegerät über die Modulationseinheit 26 anzusprechen versucht. Der Port 12a, 12b, 12c, 12d wird auf die für HART-Feldgeräte notwendigen Stromschleifen-Parameter eingestellt und es wird eine Verbindung zwischen dem Port 12a, 12b, 12c, 12d und dem HART-Mastergerät 16 hergestellt. Das HART-Mastergerät 16 versucht daraufhin einen Kommunikationsaufbau mit dem Feldgerät gemäß Konventionen der HART-Kommunikation.

Ist HART-Kommunikation möglich, so aktiviert die Protokoll-Umsetzungseinheit 18 in einem Schritt 48 die Verbindung zum Kommunikationssystem 30. Das angeschlossene HART-Feldgerät 20a, 20b, 20c kann dadurch über HART-IP kommunizieren.

Die Protokoll-Umsetzungseinheit 18 übernimmt dabei die Aufgabe, gegenüber dem Kommunikationssystem 30 eine APL- beziehungsweise Ethernet-konforme Kommunikationsschnittstelle zur Verfügung zu stellen und diese so umzusetzen, dass die HART-konforme Kommunikation des HART-Mastergeräts 16 mit dem Feldgerät 20a, 20b, 20c erfolgt.

Eine zentrale Idee der Erfindung besteht darin, eine Schnittstelle beziehungsweise ein Interface bereitzustellen, das verschiedene Protokolle unterstützt, insbesondere HART und APL. Je nachdem, welches Protokoll ein angeschlossenes Feldgerät 20a, 20b, 20c verwendet, versorgt das Interface das Feldgerät 20a, 20b, 20c über eine NAMUR konforme 4 - 20 mA-Stromschleife und führt eine Kommunikation gemäß HART-Protokoll durch, oder es wird mit einer für APL-Spurs definierten Spannung betrieben und erlaubt eine Ethernet-basierte Kommunikation.

Diese Schnittstelle kann beispielsweise als Bestandteil eines Switches oder als ein Modul eines Remote-I/O-Systems ausgebildet sein. Wird beispielsweise ein APL-Feldgerät detektiert, so kommuniziert dieses über die im Netzwerk dem Feldgerät 20a, 20b, 20c zugehörigen Ethernet-Protokolle. Beim Anschluss eines HART-Feldgerätes wird hingegen die zur Versorgung des Feldgerätes 20a, 20b, 20c notwendige 4 - 20 mA Stromschleife aktiv und ein HART-Master-Device übernimmt die Kommunikation zum Feldgerät 20a, 20b, 20c.

Die Umsetzung der Erfindung kann dann etwa in einem Managed-Switch erfolgen.

Bei einem weiteren Beispiel kann vorgesehen sein, dass die Vorrichtung als Modul eines Remote-I/O-Systems betrieben wird.

In vorhandenen Ethernet-Netzwerken können Feldgeräte 20a, 20b, 20c über HART-IP-Kommunikation zusätzliche Variablen, Diagnosedaten und weitere Daten übermitteln.

Bei einem Ausführungsbeispiel ist eine Einheit 10 vorgesehen, aus einem Kommunikationsteil 11 und einem Peripherieteil 12 besteht. Diese Einheit 10 verbindet die angeschlossenen Feldgeräte 20a, 20b, 20c mit einem übergeordneten Kommunikationssystem 30. Jedem APL- und HART-Feldgerät 20a, 20b, 20c steht dabei ein gemeinsamer Port 12a, 12b, 12c, 12d zur Verfügung, das heißt, am gleichen Port 12a, 12b, 12c, 12d können Feldgeräte 20a, 20b, 20c für verschiedene Protokolle angeschlossen werden. Der Port 12a, 12b, 12c, 12d ist mit einer Anschlusserkennung der Einheit 10 verbunden, welche je nach der Art der Feldgerätekommunikation die Verbindung zu einem HART-Master-Device 16 oder zum Ethernetswitch 19 herstellt.

Die Anschlusserkennung steuert den Spannungsbegrenzer 24 zunächst die für APL-Geräte typischen Spannungswerte. Diese liegen in der Regel unterhalb der von 4 - 20 mA HART-Feldgeräten. Anschließend wird das Kommunikationsverhalten des Feldgerätes 20a, 20b, 20c überprüft: Geht dieses konform mit dem Verhalten einer Ethernet-basierten Kommunikation, so wird der Port 12a, 12b, 12c, 12d auf die für APL-Geräte relevanten Parameter hinsichtlich Versorgung und Datenaustausch eingestellt. Nach der erfolgreichen Anschlusserkennung stellt eine Verbindungsstufe eine Verbindung zwischen dem Port 12a, 12b, 12c, 12d und der übergeordneten Kommunikationseinheit 30 her.

Wird keine Ethernet-basierte Kommunikation detektiert, so wird der Port 12a, 12b, 12c, 12d auf die für HART-Feldgeräte notwendigen Stromschleifen-Parameter eingestellt. Die Anschlusserkennung stellt über die Modulationseinheit 26eine Verbindung zwischen Port 12a, 12b, 12c, 12d und HART-Master-Device 16 her. Das HART-Master-Device 16 versucht daraufhin einen Kommunikationsaufbau mit dem Feldgerät 20a, 20b, 20c gemäß Konventionen des HART-Protokolls. Ist eine HART-konforme Kommunikation möglich, so aktiviert die Protokollumsetzungseinheit die Verbindung zum übergeordneten Kommunikationssystem 30, wodurch das angeschlossenen HART-Feldgerät 20a, 20b, 20c zum HART-IP-Device wird.

Das Feldgerät 20a, 20b, 20c kann nun eine Kommunikation mit dem übergeordneten Kommunikationssystem 30 aufbauen sowie Daten empfangen und senden. Dabei wird auch die Spannungsversorgung des Feldgeräts 20a, 20b, 20c je nach dem verwendeten HART- oder APL- beziehungsweise Ethernet-Protokoll angepasst.

Hieraus ergeben sich auch ökonomische Vorteile: In bestehenden Anlagen, die modernisiert werden ist typischerweise eine Vielzahl von 4 - 20 mA HART-Geräten verbaut. Bei Modernisierungen werden diese in der Regel aufgrund ihrer Bewährtheit nicht ausgetauscht, solange keine unmittelbare Notwendigkeit hierfür besteht. Steht jedoch die Digitalisierung im Vordergrund, so können Geräte mit besonderem Fokus auf der Bereitstellung von Informationen durch den Austausch der Elektronik auf APL umgestellt werden. Ein Multiport-Gerät, das sowohl HART als auch APL unterstützt, erlaubt hier den Parallelbetrieb beider Kommunikationsmöglichkeiten, auch ohne die für die APL-Feldgeräte notwendige Infrastruktur für APL zu sämtlichen Feldgeräten hin zu installieren.

### Bezugszeichenliste

10 Vorrichtung
11 Kommunikations-Modul
12 Peripherie-Modul
12a, 12b, 12c, 12d Feldgerät-Schnittstelle; Port; Anschluss
14 Umschaltungseinheit
16 HART-Mastergerät
18 Protokoll-Umsetzungseinheit
19 Kommunikations-Schnittstelle; Ethernet-Switch
20a, 20b, 20c Feldgerät
22 Remote-I/O-Gateway
24 Spannungsbegrenzer
26 Modulationseinheit
28a 28b, 28c Leitung
30 Kommunikationssystem; Bus-System
42, 44, 46, 48 Schritt

## Patentansprüche

1. Vorrichtung (10) zum Verbinden eines Feldgeräts (20a, 20b, 20c) mit einem Kommunikationssystem (30), umfassend
eine Feldgerät-Schnittstelle (12a, 12b, 12c, 12d) zum Anschließen des Feldgeräts (20a, 20b, 20c);
eine Kommunikations-Schnittstelle (19) zum Anschließen an das Kommunikationssystem (30);
eine Protokoll-Umsetzungseinheit (18); und
eine Umschaltungseinheit (14); wobei
die Umschaltungseinheit (14) dazu eingerichtet ist, beim Anschluss des Feldgeräts (20a, 20b, 20c) ein von dem Feldgerät (20a, 20b, 20c) verwendetes Protokoll zu erkennen und in Abhängigkeit von dem erkannten Protokoll eine Verbindung zwischen dem angeschlossenen Feldgerät (20a, 20b, 20c) und der Kommunikations-Schnittstelle (19) über die Protokoll-Umsetzungseinheit (18) herzustellen;
**dadurch gekennzeichnet, dass**
das Kommunikationssystem (30) ein Ethernet-basiertes Bus-System umfasst; und
die Umschaltungseinheit (14) dazu eingerichtet ist, wenn das von dem angeschlossenen Feldgerät (20a, 20b, 20c) verwendete Protokoll ein HART-Protokoll ist, eine Verbindung zwischen dem angeschlossenen Feldgerät (20a, 20b, 20c) und der Protokoll-Umsetzungseinheit (18) herzustellen; wobei
die Protokoll-Umsetzungseinheit (18) ferner ein HART-Mastergerät (16) umfasst,
wobei die Umschaltungseinheit (14) ferner dazu eingerichtet ist, wenn das angeschlossene Feldgerät (20a, 20b, 20c) eine dem APL-Standard entsprechende Übertragungsphysik verwendet, eine direkte Verbindung zwischen dem angeschlossenen Feldgerät (20a, 20b, 20c) und der Kommunikations-Schnittstelle (19) herzustellen.

2. Vorrichtung (10) gemäß Anspruch 1,
**dadurch gekennzeichnet, dass,**
wenn das von dem angeschlossenen Feldgerät (20a, 20b, 20c) verwendete Protokoll ein HART-Protokoll ist, eine NAMUR-konforme Stromschleife zur Versorgung des Feldgerätes (20a, 20b, 20c) mit 4 - 20 mA aktivierbar ist.

3. Vorrichtung (10) gemäß einem der vorhergehenden Ansprüche,
**dadurch gekennzeichnet, dass**
die Feldgerät-Schnittstelle (12a, 12b, 12c, 12c) zum Anschließen mehrerer Feldgeräte (20a, 20b, 20c, 20d) eingerichtet ist; wobei
die Feldgeräte (20a, 20b, 20c, 20d) unterschiedliche Protokolle verwenden können.

4. Vorrichtung (10) gemäß einem der vorhergehenden Ansprüche,
**dadurch gekennzeichnet, dass**
die Umschaltungseinheit (14) dazu eingerichtet ist, beim Erkennen des von dem Feldgerät (20a, 20b, 20c, 20d) verwendeten Protokolls zunächst eine Anschlusserkennung gemäß Ethernet-Standard auszuführen und, falls kein Ethernet-basiertes Protokoll erkannt wurde, anschließend einen Verbindungsversuch mittels HART-Protokoll auszuführen.

5. Verfahren zum Verbinden eines Feldgeräts (20a, 20b, 20c, 20d) mit einem Kommunikationssystem (30), wobei
beim Anschluss des Feldgeräts (20a, 20b, 20c, 20d) eine Erkennung eines von dem Feldgerät (20a, 20b, 20c, 20d) verwendeten Protokolls ausgeführt wird; wobei
in Abhängigkeit von dem erkannten Protokoll eine Verbindung zwischen dem angeschlossenen Feldgerät (20a, 20b, 20c, 20d) und dem Kommunikationssystem (30) so hergestellt wird, dass eine Protokoll-Umsetzung ausgeführt wird;
**dadurch gekennzeichnet, dass**
das Kommunikationssystem (30) ein Ethernet-basiertes Bus-System umfasst; und,
wenn das von dem angeschlossenen Feldgerät (20a, 20b, 20c) verwendete Protokoll ein HART-Protokoll ist, eine Verbindung zwischen dem angeschlossenen Feldgerät (20a, 20b, 20c) und einer Protokoll-Umsetzungseinheit (18) zum Ausführen der Protokoll-Umsetzung hergestellt wird; wobei
die Protokoll-Umsetzungseinheit (19) ferner ein HART-Mastergerät (16) umfasst,
wobei beui dem Verfahren wenn das angeschlossene Feldgerät (20a, 20b, 20c) eine dem APL-Standard entsprechende Übertragungsphysik verwendet, eine direkte Verbindung hergestellt wird, zwischen dem angeschlossenen Feldgerät (20a, 20b, 20c) und einer Kommunikations-Schnittstelle (19) die zum Anschließen an das Kommunikationssystem (30) konfiguriert ist.

## Claims

1. Apparatus (10) for connecting a field device (20a, 20b, 20c) to a communication system (30), comprising
a field-device interface (12a, 12b, 12c, 12d) for connecting the field device (20a, 20b, 20c);
a communication interface (19) for connecting to the communication system (30);
a protocol conversion unit (18); and
a switching unit (14); wherein
the switching unit (14) is set up to, when the field device (20a, 20b, 20c) is connected, detect a protocol used by the field device (20a, 20b, 20c) and, depending on the detected protocol, establish a connection between the connected field device (20a, 20b, 20c) and the communication interface (19) via the protocol conversion unit (18);
**characterized in that**
the communication system (30) comprises an Ethernet-based bus system; and
the switching unit (14) is set up to, if the protocol used by the connected field device (20a, 20b, 20c) is a HART protocol, establish a connection between the connected field device (20a, 20b, 20c) and the protocol conversion unit (18); wherein
the protocol conversion unit (18) further comprises a HART master device (16),
wherein the switching unit (14) is further set up to, if the connected field device (20a, 20b, 20c) uses transmission physics corresponding to the APL standard, establish a direct connection between the connected field device (20a, 20b, 20c) and the communication interface (19).

2. Apparatus (10) according to Claim 1,
**characterized in that**,
if the protocol used by the connected field device (20a, 20b, 20c) is a HART protocol, a NAMUR-compliant current loop for supplying the field device (20a, 20b, 20c) with 4-20 mA is able to be activated.

3. Apparatus (10) according to either of the preceding claims,
**characterized in that**
the field-device interface (12a, 12b, 12c, 12c) is set up to connect a plurality of field devices (20a, 20b, 20c, 20d); wherein
the field devices (20a, 20b, 20c, 20d) can use different protocols.

4. Apparatus (10) according to one of the preceding claims,
**characterized in that**
the switching unit (14) is set up to, when detecting the protocol used by the field device (20a, 20b, 20c, 20d), first of all perform a connection detection according to the Ethernet standard and, if no Ethernet-based protocol has been detected, subsequently perform a connection attempt by means of HART protocol.

5. Method for connecting a field device (20a, 20b, 20c, 20d) to a communication system (30), wherein,
when the field device (20a, 20b, 20c, 20d) is connected, detection of a protocol used by the field device (20a, 20b, 20c, 20d) is performed; wherein,
depending on the detected protocol, a connection between the connected field device (20a, 20b, 20c, 20d) and the communication system (30) is established such that a protocol conversion is performed;
**characterized in that**
the communication system (30) comprises an Ethernet-based bus system; and,
if the protocol used by the connected field device (20a, 20b, 20c) is a HART protocol, a connection is established between the connected field device (20a, 20b, 20c) and a protocol conversion unit (18) for performing the protocol conversion; wherein
the protocol conversion unit (19) further comprises a HART master device (16),
wherein, in the method, if the connected field device (20a, 20b, 20c) uses transmission physics corresponding to the APL standard, a direct connection is established between the connected field device (20a, 20b, 20c) and a communication interface (19) which is configured for connecting to the communication system (30).

## Revendications

1. Dispositif (10) destiné à connecter un appareil de terrain (20a, 20b, 20c) à un système de communication (30), comprenant
une interface d'appareil de terrain (12a, 12b, 12c, 12d) servant au raccordement de l'appareil de terrain (20a, 20b, 20c) ;
une interface de communication (19) servant au raccordement au système de communication (30) ;
une unité de conversion de protocole (18) ; et
une unité de permutation (14) ;
l'unité de permutation (14) étant conçue pour reconnaître un protocole utilisé par l'appareil de terrain (20a, 20b, 20c) lors du raccordement de l'appareil de terrain (20a, 20b, 20c) et pour établir une connexion entre l'appareil de terrain (20a, 20b, 20c) raccordé et l'interface de communication (19) par le biais de l'unité de conversion de protocole (18) en fonction du protocole reconnu ;
**caractérisé en ce que**
le système de communication (30) comprend un système de bus basé sur Ethernet ; et
l'unité de permutation (14) est conçue pour, lorsque le protocole utilisé par l'appareil de terrain (20a, 20b, 20c) raccordé est un protocole HART, établir une connexion entre l'appareil de terrain (20a, 20b, 20c) raccordé et l'unité de conversion de protocole (18) ;
l'unité de conversion de protocole (18) comprenant en outre un appareil maître HART (16),
l'unité de permutation (14) étant en outre conçue pour, lorsque l'appareil de terrain (20a, 20b, 20c) raccordé utilise une physique de transmission correspondant à la norme APL, établir une connexion directe entre l'appareil de terrain (20a, 20b, 20c) raccordé et l'interface de communication (19).

2. Dispositif (10) selon la revendication 1, **caractérisé en ce que**
lorsque le protocole utilisé par l'appareil de terrain (20a, 20b, 20c) raccordé est un protocole HART, une boucle de courant conforme NAMUR servant à alimenter l'appareil de terrain (20a, 20b, 20c) en 4 - 20 mA peut être activée.

3. Dispositif (10) selon l'une des revendications précédentes,
**caractérisé en ce que**
l'interface d'appareil de terrain (12a, 12b, 12c, 12c) est conçue pour le raccordement d'une pluralité d'appareil de terrain (20a, 20b, 20c, 20d) ;
les appareils de terrain (20a, 20b, 20c, 20d) pouvant utiliser des protocoles différents.

4. Dispositif (10) selon l'une des revendications précédentes,
**caractérisé en ce que**
l'unité de permutation (14) est conçue pour, lors de la reconnaissance du protocole utilisé par l'appareil de terrain (20a, 20b, 20c, 20d), effectuer tout d'abord une reconnaissance de raccordement selon la norme Ethernet et, dans le cas où aucun protocole basé sur Ethernet n'a été reconnu, effectuer ensuite une tentative de connexion au moyen du protocole HART.

5. Procédé de connexion d'un appareil de terrain (20a, 20b, 20c, 20d) à un système de communication (30),
une reconnaissance d'un protocole utilisé par l'appareil de terrain (20a, 20b, 20c, 20d) étant effectuée lors du raccordement de l'appareil de terrain (20a, 20b, 20c, 20d) ;
en fonction du protocole reconnu, une connexion étant établie entre l'appareil de terrain (20a, 20b, 20c, 20d) raccordé et le système de communication (30) de telle sorte qu'une conversion de protocole est effectuée ;
**caractérisé en ce que**
le système de communication (30) comprend un système de bus basé sur Ethernet ; et
lorsque le protocole utilisé par l'appareil de terrain (20a, 20b, 20c) raccordé est un protocole HART, une connexion est établie entre l'appareil de terrain (20a, 20b, 20c) raccordé et une unité de conversion de protocole (18) afin d'effectuer la conversion de protocole ;
l'unité de conversion de protocole (19) comprenant en outre un appareil maître HART (16),
avec le procédé, lorsque l'appareil de terrain (20a, 20b, 20c) raccordé utilise une physique de transmission correspondant à la norme APL, une connexion directe étant établie entre l'appareil de terrain (20a, 20b, 20c) raccordé et une interface de communication (19) qui est configurée pour le raccordement au système de communication (30).
